# EUROPEAN PATENT APPLICATION

(11) **EP 4 797 848 A1**
(43) Date of publication of application: **26.08.2026**
(21) Application number: 24893309.5
(22) Date of filing: 13.11.2024
(51) Int. Cl.: H04W 72/232

(54) **COMMUNICATION METHOD AND APPARATUS**

(30) Priority: 22.11.2023 CN 202311572816
(71) Applicant: HUAWEI TECHNOLOGIES CO., LTD., Shenzhen, Guangdong 518129 (CN)
(72) Inventor: CHEN, Ying, Shenzhen, Guangdong 518129 (CN); ZHANG, Jiayin, Shenzhen, Guangdong 518129 (CN); ZHAO, Feiran, Shenzhen, Guangdong 518129 (CN); TIE, Xiaolei, Shenzhen, Guangdong 518129 (CN)
(74) Representative: Maiwald GmbH
(86) International application number: PCT/CN2024/131760
(87) International publication number: WO 2025/108151

(57) **Abstract**

Embodiments of this application provide a communication method and apparatus. The method includes: A network device sends first information to a terminal device, where the first information indicates a first number N of repetitions of first downlink data, and N is an integer greater than or equal to 2. The network device sends N pieces of first downlink data to the terminal device at N first resource locations respectively, where the N first resource locations one-to-one correspond to the N pieces of first downlink data. This can reduce a communication latency, and improve communication efficiency.

## Description

### CROSS-REFERENCE TO RELATED APPLICATIONS

This application claims priority to Chinese Patent Application No. 202311572816.7, filed with the China National Intellectual Property Administration on November 22, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Compared with terrestrial communication, satellite communication has unique advantages. For example, satellite communication can provide wider coverage, and a satellite base station is not prone to damage from a natural disaster or an external force. Therefore, satellite communication and terrestrial communication (for example, 5G communication) are inevitable trends of future communication.

In a communication process, reliability of data transmission is usually ensured by using a retransmission mechanism. The retransmission mechanism means that a network device determines, based on feedback information of a terminal device, to retransmit current data or schedule next data. However, the network device can determine, only after obtaining the feedback information of the terminal device, whether to perform retransmission, which causes a large delay. In a scenario in which a link budget is low (for example, satellite communication), a delay caused by the retransmission mechanism severely affects communication efficiency.

### SUMMARY

Embodiments of this application provide a communication method and apparatus, to reduce a communication latency and improve communication efficiency.

According to a first aspect, an embodiment of this application provides a communication method, applied to a network device. The method includes: The network device sends first information to a terminal device, where the first information indicates a first number N of repetitions of first downlink data, and N is an integer greater than or equal to 2. The network device sends N pieces of first downlink data to the terminal device at N first resource locations respectively, where the N first resource locations one-to-one correspond to the N pieces of first downlink data.

According to the method, the network device may directly send the first downlink data to the terminal device at the N first resource locations, to reduce a latency caused by receiving feedback information by the network device, reduce a communication latency, improve communication efficiency, and implement enhanced downlink coverage.

In a possible design, the method further includes: The network device sends first DCI to the terminal device, where the first DCI indicates the N first resource locations.

Based on this design, the network device indicates the N first resource locations via the first DCI, to improve communication accuracy.

In a possible design, the method further includes: The network device sends second DCI to the terminal device, where the second DCI indicates N second resource locations. The network device sends the N pieces of first downlink data to the terminal device at the N second resource locations respectively.

Based on this design, in some cases, the network device may resend the N pieces of first downlink data, to further ensure that the terminal device can obtain the first downlink data. This further improves communication accuracy.

In a possible design, the method further includes: The network device sends N pieces of third DCI to the terminal device, where the N pieces of third DCI one-to-one correspond to the N first resource locations, and any piece of third DCI indicates a corresponding first resource location.

Based on this design, the network device indicates the N first resource locations via the N pieces of DCI, to improve communication accuracy.

In a possible design, the process in which the network device sends the N pieces of third DCI to the terminal device includes: The network device sends the N pieces of third DCI at N third resource locations respectively, where the N third resource locations and the N first resource locations are interleaved in time domain, or the N third resource locations and the N first resource locations are interleaved in frequency domain.

Based on this design, the network device schedules resource locations of the first downlink data one by one via the N pieces of DCI, to improve communication accuracy.

In a possible design, the first information includes the first number of repetitions; or the first information includes an index of the first number of repetitions; or the first information includes a first repetition indication, and the first repetition indication indicates that the first number of repetitions is a preset number of repetitions; or the first information includes a first repetition offset, and the first repetition offset indicates an offset value of the first number of repetitions relative to the preset number of repetitions; or the first information includes a first reference value, and the first reference value is used by the terminal device to determine the first number of repetitions according to a specified algorithm.

Based on this design, the first information may indicate the first number of repetitions in a plurality of manners, to improve flexibility of the communication method.

In a possible design, the first information is carried in fourth DCI.

In a possible design, the process in which the network device sends the N pieces of first downlink data to the terminal device at the N first resource locations respectively includes: The network device sends N first messages to the terminal device at the N first resource locations respectively, where each first message includes one piece of first downlink data. The first information indicates the first number N of repetitions of the first message.

In a possible design, the first message is msg2 or msg4, and the fourth DCI is DCI for scheduling msg2.

Based on this design, the network device can indicate, via DCI (a reserved bit) for scheduling msg2, a number of repetitions corresponding to msg2 or msg4, to reduce a waste of signaling resources.

In a possible design, when the first message is msg2, configuration of the fourth DCI includes any one of the following: the fourth DCI includes a first field, and the first field indicates a number of repetitions of msg2 and an index of the number of repetitions of msg2; and the fourth DCI includes a second field, the second field indicates a second repetition indication or a second repetition offset, the second repetition indication indicates that the number of repetitions of msg2 is a first preset number of repetitions, and the second repetition offset indicates an offset value of the number of repetitions of msg2 relative to the first preset number of repetitions. Alternatively, when the first message is msg4, configuration of the fourth DCI includes any one of the following: the fourth DCI includes a third field, and the third field indicates a number of repetitions of msg4 and an index of the number of repetitions of msg4; the fourth DCI includes a fourth field, the fourth field indicates a third repetition indication or a third repetition offset, the third repetition indication indicates that the number of repetitions of msg4 is a second preset number of repetitions, and the third repetition offset indicates an offset value of the number of repetitions of msg4 relative to the second preset number of repetitions; and the fourth DCI includes a fifth field and a sixth field, the fifth field indicates a number of repetitions of msg2 and an index of the number of repetitions of msg2, the sixth field indicates a fourth repetition indication, and the fourth repetition indication indicates that the number of repetitions of msg4 is the number of repetitions indicated by the fifth field.

In a possible design, the first downlink data is carried in msg2, the first information includes numbers of repetitions corresponding to a plurality of synchronization signal blocks, the first number of repetitions is a number of repetitions corresponding to a first synchronization signal block in the plurality of synchronization signal blocks, the first synchronization signal block is any one of the plurality of synchronization signal blocks, any synchronization signal block includes configuration information used to determine an RO, and the method further includes: The network device receives msg1 sent by the terminal device in a first RO, and determines the first synchronization signal block based on the first RO.

Based on this design, the network device and the terminal device can determine the first number of repetitions based on the synchronization signal block corresponding to the first RO, so that the network device and the terminal device reach a consensus on the first number of repetitions. This can reduce signaling interaction and save communication resources.

In a possible design, the method further includes: The network device receives a repetition request from the terminal device, where the repetition request is used to request to repeatedly transmit the first downlink data.

Based on this design, the terminal device may actively request to repeatedly transmit the first downlink data, to improve accuracy of the communication method.

In a possible design, the first information further indicates a second number X of repetitions of first uplink data, X is an integer greater than or equal to 2, and the method further includes: The network device receives X pieces of first uplink data from the terminal device at X fourth resource locations respectively, where the X fourth resource locations one-to-one correspond to the X pieces of first uplink data.

Based on this design, the network device may further indicate the second number of repetitions of the first uplink data, to reduce a probability that the terminal device fails to transmit the first uplink data, and reduce a latency generated when the terminal device receives feedback information indicating that the first uplink data fails to be uploaded. This can reduce a communication delay, improve communication efficiency, and implement enhanced uplink coverage.

According to a second aspect, an embodiment of this application provides a communication method, applied to a terminal device. The method includes: The terminal device receives first information from a network device, where the first information indicates a first number N of repetitions of first downlink data, and N is an integer greater than or equal to 2. The terminal device receives N pieces of first downlink data from the network device at N first resource locations respectively, where the N first resource locations one-to-one correspond to the N pieces of first downlink data.

In a possible design, the method further includes: The terminal device receives first DCI from the network device, where the first DCI indicates the N first resource locations.

In a possible design, the method further includes: The terminal device receives second DCI from the network device, where the second DCI indicates N second resource locations. The terminal device receives the N pieces of first downlink data from the network device at the N second resource locations respectively.

In a possible design, the method further includes: The terminal device receives N pieces of third DCI from the network device, where the N pieces of third DCI one-to-one correspond to the N first resource locations, and any piece of third DCI indicates a corresponding first resource location.

In a possible design, that the terminal device receives the N pieces of third DCI from the network device includes: The terminal device receives the N pieces of third DCI from the network device at N third resource locations respectively, where the N third resource locations and the N first resource locations are interleaved in time domain, or the N third resource locations and the N first resource locations are interleaved in frequency domain.

In a possible design, the first information includes the first number of repetitions; or the first information includes an index of the first number of repetitions; or the first information includes a first repetition indication, and the first repetition indication indicates that the first number of repetitions is a preset number of repetitions; or the first information includes a first repetition offset, and the first repetition offset indicates an offset value of the first number of repetitions relative to the preset number of repetitions; or the first information includes a first reference value, and the first reference value is used by the terminal device to determine the first number of repetitions according to a specified algorithm.

In a possible design, the first information is carried in fourth DCI.

In a possible design, that the terminal device receives N pieces of first downlink data from the network device at N first resource locations respectively includes: The terminal device receives N first messages from the network device at the N first resource locations respectively, where each first message includes one piece of first downlink data. The first information indicates the first number N of repetitions of the first message.

In a possible design, the first message is msg2 or msg4, and the fourth DCI is DCI for scheduling msg2.

In a possible design, when the first message is msg2, configuration of the fourth DCI includes any one of the following: the fourth DCI includes a first field, and the first field indicates a number of repetitions of msg2 and an index of the number of repetitions of msg2; and the fourth DCI includes a second field, the second field indicates a second repetition indication or a second repetition offset, the second repetition indication indicates that the number of repetitions of msg2 is a first preset number of repetitions, and the second repetition offset indicates an offset value of the number of repetitions of msg2 relative to the first preset number of repetitions. Alternatively, when the first message is msg4, configuration of the fourth DCI includes any one of the following: the fourth DCI includes a third field, and the third field indicates a number of repetitions of msg4 and an index of the number of repetitions of msg4; the fourth DCI includes a fourth field, the fourth field indicates a third repetition indication or a third repetition offset, the third repetition indication indicates that the number of repetitions of msg4 is a second preset number of repetitions, and the third repetition offset indicates an offset value of the number of repetitions of msg4 relative to the second preset number of repetitions; and the fourth DCI includes a fifth field and a sixth field, the fifth field indicates a number of repetitions of msg2 and an index of the number of repetitions of msg2, the sixth field indicates a fourth repetition indication, and the fourth repetition indication indicates that the number of repetitions of msg4 is the number of repetitions indicated by the fifth field.

In a possible design, the first downlink data is carried in msg2, the first information includes numbers of repetitions corresponding to a plurality of synchronization signal blocks, the first number of repetitions is a number of repetitions corresponding to a first synchronization signal block in the plurality of synchronization signal blocks, the first synchronization signal block is any one of the plurality of synchronization signal blocks, any synchronization signal block includes configuration information used to determine an RO, and the method further includes: The terminal device sends msg1 to the network device in a first RO, and determines the first number N of repetitions based on the first RO.

In a possible design, the method further includes: The terminal device sends a repetition request to the network device, where the repetition request is used to request to repeatedly transmit the first downlink data.

In a possible design, the first information further indicates a second number X of repetitions of first uplink data, X is an integer greater than or equal to 2, and the method further includes: The terminal device sends X pieces of first uplink data to the network device at X fourth resource locations respectively, where the X fourth resource locations one-to-one correspond to the X pieces of first uplink data.

According to a third aspect, this application further provides a communication apparatus. The communication apparatus may perform the foregoing method designs. The communication apparatus may be a chip or a circuit that can perform functions corresponding to the foregoing method, or a device including the chip or the circuit.

In a possible design, the communication apparatus includes a communication unit, configured to receive and send data. The communication apparatus further includes a processing unit, configured to implement steps of the method in the first aspect, or steps of the method in the second aspect. The functions may be implemented by hardware, or may be implemented by hardware executing corresponding software. The hardware or the software includes one or more units corresponding to the foregoing function.

According to a fourth aspect, this application further provides a communication device. The communication device may perform the foregoing method designs. The communication device includes: a memory, configured to store computer-executable program code; and a processor, where the processor is coupled to the memory. The program code stored in the memory includes instructions. When the processor executes the instructions, the communication device or a device on which the communication device is mounted is enabled to perform the method in any possible design of the first aspect, and the method in any possible design of the second aspect.

The communication device may further include a communication interface. Alternatively, if the communication device is a chip or a circuit, the communication interface may be an input/output interface of the chip, for example, an input/output pin.

According to a fifth aspect, this application provides a communication system. The communication system includes one or more apparatuses of the terminal device performing the first aspect and/or the network device performing the second aspect.

According to a sixth aspect, this application provides a computer-readable storage medium. The computer-readable storage medium stores a computer program, and when the computer program is run on an apparatus, the method in any possible design of the first aspect, or the method in any possible design of the second aspect is performed.

According to a seventh aspect, this application provides a computer program product. A computer-readable storage medium stores computer-executable instructions, and when the computer-executable instructions are invoked by a computer, the method in any possible design of the first aspect, or the method in any possible design of the second aspect is performed.

According to an eighth aspect, this application provides a chip. The chip includes a processor and a memory, and the processor is coupled to the memory, and is configured to read a computer program stored in the memory, to perform the method in any possible design of the first aspect, or the method in any possible design of the second aspect

In addition, for technical effect brought by the second aspect to the eighth aspect, refer to the descriptions in the first aspect. Details are not described herein again.

### BRIEF DESCRIPTION OF DRAWINGS

FIG. 1 is a diagram of an architecture of a communication system according to an embodiment of this application;
FIG. 2 is a diagram of a network application architecture according to an embodiment of this application;
FIG. 3a is a schematic flowchart of a communication method according to an embodiment of this application;
FIG. 3b is a schematic flowchart of another communication method according to an embodiment of this application;
FIG. 4 is a diagram of a communication example according to an embodiment of this application;
FIG. 5A and FIG. 5B are a diagram of another communication example according to an embodiment of this application;
FIG. 6 is a diagram of another communication example according to an embodiment of this application;
FIG. 7 is a diagram of another communication example according to an embodiment of this application;
FIG. 8 is a diagram of a structure of a communication apparatus according to an embodiment of this application; and
FIG. 9 is a diagram of a structure of a communication device according to an embodiment of this application.

### DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. In descriptions of this application, terms such as "first" and "second" are merely used for differentiated description, and cannot be understood as an indication or implication of relative importance, or cannot be understood as an indication or implication of an order.

A communication method provided in embodiments of this application may be applied to a 4th generation (4th generation, 4G) communication system (for example, long term evolution (long term evolution, LTE)), a 5th generation (5th generation, 5G) communication system (for example, 5G new radio (new radio, NR)), various future evolved communication systems, or a space-air-sea-ground integrated communication system. The method provided in embodiments of this application may be applied to a terrestrial network communication system, or a non-terrestrial network (non-terrestrial network, NTN) communication system.

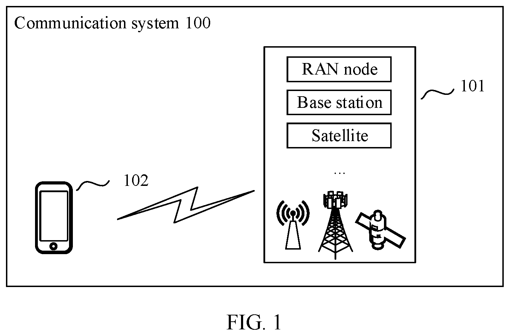

FIG. 1 shows an architecture of a communication system to which an embodiment of this application is applicable. As shown in FIG. 1, a communication system 100 includes a network device 101 and a terminal device 102.

First, possible implementation forms and functions of the network device 101 and the terminal device 102 are described by using an example.

The network device 101 provides a service for the terminal device 102 within coverage. For example, as shown in FIG. 1, the network device 101 provides wireless access for one or more terminal devices 102 within the coverage of the network device 101.

The network device 101 may be a node in a radio access network (radio access network, RAN), and may also be referred to as a base station, or may be referred to as a RAN node (or device). Examples of the network device 101 are: a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), or a wireless fidelity (wireless fidelity, Wi-Fi) access point (access point, AP).

The network device 101 may alternatively be a module or unit that completes a part of functions of the base station. For example, the network device 101 may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to technical specifications related to the 3rd generation partnership project (3rd generation partnership project, 3GPP).

The network device 101 may alternatively be a satellite, and the satellite may also be referred to as a high-altitude platform, a high-altitude aircraft, or a satellite base station. The network device 101 may alternatively be another device that has a function of the network device. For example, the network device 101 may alternatively be a device that functions as the network device in device-to-device (device-to-device, D2D) communication, and vehicle-to-everything or machine-to-machine (machine-to-machine, M2M) communication. The network device 101 may alternatively be any possible network device in a future communication system. In embodiments of this application, the function of the network device 101 may alternatively be performed by a module (for example, a chip) in the network device, or may be performed by a control subsystem that includes the function of the network device. The control subsystem including the function of the network device may be a control center in the foregoing application scenarios such as smart grid, industrial control, intelligent transportation, and a smart city.

The terminal device 102 is also referred to as user equipment (user equipment, UE), a mobile station (mobile station, MS), a mobile terminal (mobile terminal, MT), or the like, and is a device that provides a user with voice and/or data connectivity. For example, the terminal device 102 includes a handheld device, a vehicle-mounted device, or the like that has a wireless connection function. Currently, the terminal device 102 may be: a mobile phone (mobile phone), a tablet computer, a notebook computer, a palmtop computer, a mobile Internet device (mobile Internet device, MID), a wearable device (for example, a smartwatch, a smart band, or a pedometer), a vehicle-mounted device (for example, a car, a bicycle, an electric car, an airplane, a ship, a train, or a high-speed rail), a virtual reality (virtual reality, VR) device, an augmented reality (augmented reality, AR) device, a wireless terminal in industrial control (industrial control), a smart home device (for example, a refrigerator, a television, an air conditioner, or a meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city, a wireless terminal in a smart home, a flight device (for example, an intelligent robot, a hot air balloon, an uncrewed aerial vehicle, or an airplane), or the like.

The terminal device 102 may alternatively be another device that has a function of the terminal device. For example, the terminal device 102 may alternatively be a device that functions as the terminal device in device-to-device (device-to-device, D2D) communication, vehicle-to-everything or machine-to-machine (machine-to-machine, M2M) communication. In particular, when communication is performed between network devices, a network device that functions as a terminal device may also be considered as a terminal device. The method provided in embodiments of this application may be performed by a terminal device, or may be performed by a component (for example, a processor, a chip, or a chip system) of the terminal device.

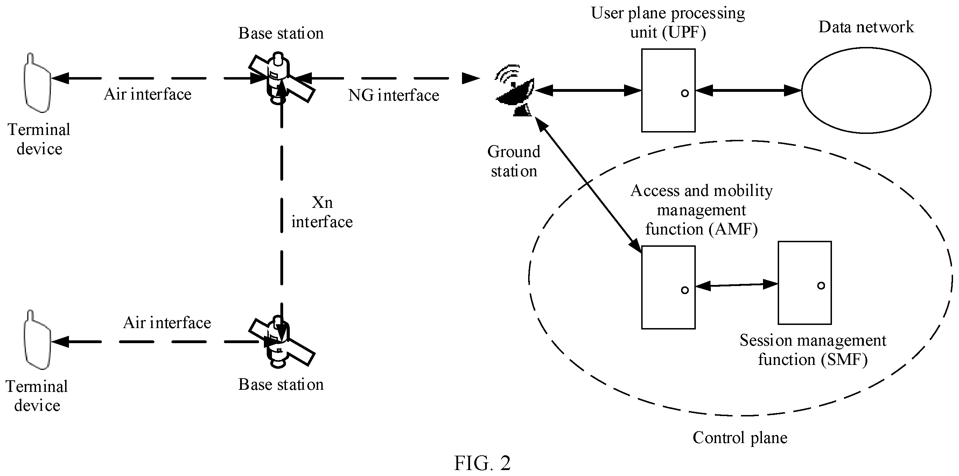

FIG. 2 shows an example of a network application architecture in an NTN scenario according to this application. A terminal device may access a network through an air interface (the air interface may be an air interface of various types, for example, a 5G air interface). A base station is deployed on the ground or a satellite, and is connected to a terrestrial core network (not shown in the figure, where the core network includes a user plane and a control plane) via a radio link. There is a radio link (for example, an Xn interface) between satellites, and the radio link may be used for signaling exchange and user data transmission between base stations. In FIG. 2, uplink/downlink data communication is performed between radio access network elements (for example, a terminal device, a base station, and a ground station) according to a wireless communication protocol. The network elements and interfaces shown in FIG. 2 are described below.

A core network provides services such as user access control, mobility management, session management, user security authentication, and charging. The core network includes a plurality of functional units, which may be classified into a control plane functional entity and a user plane functional entity. The control plane includes an access and mobility management function (access and mobility management function, AMF) unit and a session management function (session management function, SMF) unit. The AMF unit is responsible for user access management, security authentication, and mobility management. The user plane includes a user plane function (user plane function, UPF) unit. The UPF unit is responsible for functions such as user plane data transmission, traffic statistics, and security monitoring.

A ground station is responsible for forwarding signaling and service data between a satellite base station and the core network.

An air interface is a radio link between a terminal device and a base station. For example, the air interface may be a 5G air interface, and the 5G air interface is a radio link between the terminal device and a 5G base station.

Xn interface: The Xn interface is an interface between base stations, and is mainly used for signaling exchange such as handover.

An NG interface is an interface between the base station and the core network, and is mainly for exchanging signaling such as NAS of the core network and service data of a user.

A terminal device is a mobile device that supports new radio, and may access a satellite network through an air interface and initiate services such as a call and Internet access. For example, the terminal device may be considered as the terminal device 102 included in the communication system 100.

A base station provides a wireless access service, schedules a radio resource to an accessed terminal device, and provides a reliable wireless transmission protocol and data encryption protocol, and the like. For example, the base station may be considered as the network device 101 included in the communication system 100, or an apparatus (for example, a chip system, where the apparatus may be installed in the network device 101) configured to implement a function of the network device.

To reduce a communication latency and improve communication efficiency, an embodiment of this application provides a communication method. The communication method may be implemented in the communication system shown in FIG. 1, and the communication method may be further applied to the application architecture shown in FIG. 2. The following describes, with reference to the accompanying drawings, the communication method provided in embodiments of this application.

The following first describes concepts of some terms in embodiments of this application.

First downlink control information (downlink control information, DCI) is resource location information (for example, a resource block occupied in frequency domain and a monitoring location in time domain) used to schedule downlink data of the terminal device. Functions of second DCI and third DCI are similar to those of the first DCI, and different DCI is used to schedule resource location information of different downlink data. Formats of the first DCI, the second DCI, and the third DCI may be the same or different. This is not specifically limited in this application.

Fourth DCI indicates a number of repetitions of downlink data.

Fifth DCI indicates a number of repetitions of uplink data.

Sixth DCI is resource location information (for example, a resource block occupied in frequency domain and a monitoring location in time domain) used to schedule uplink data of the terminal device. Functions of seventh DCI and eighth DCI are similar to those of the sixth DCI, and different DCI is used to schedule resource location information of different uplink data. Formats of the sixth DCI, the seventh DCI, and the eighth DCI may be the same or different. This is not specifically limited in this application.

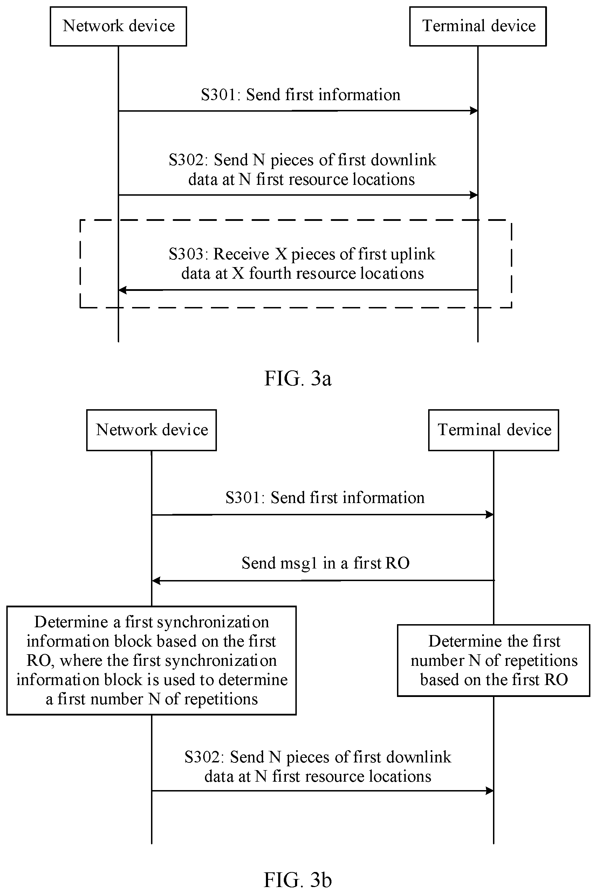

FIG. 3a is a schematic flowchart of a communication method according to an embodiment of this application. The method may include the following steps.

S301: A network device sends first information to a terminal device, where the first information indicates a first number N of repetitions of first downlink data, and N is an integer greater than or equal to 2. Correspondingly, the terminal device receives the first information from the network device.

Optionally, a manner in which the first information indicates the first number of repetitions includes but is not limited to the following three manners:

Manner 1: The first information includes the first number of repetitions; or the first information includes an index of the first number of repetitions; or the first information includes a first repetition indication, and the first repetition indication indicates that the first number of repetitions is a preset number of repetitions; or the first information includes a first repetition offset, and the first repetition offset indicates an offset value of the first number of repetitions relative to the preset number of repetitions; or the first information includes a first reference value, and the first reference value is used by the terminal device to determine the first number of repetitions according to a specified algorithm.

For example, it is assumed that the first information occupies 2 bytes, and the first information includes a number of repetitions. The first information is 00, 01, 10, or 11, that is, the first information may indicate that the number of repetitions of the first downlink data is any one of 0 to 3.

For another example, it is assumed that the first information occupies 2 bytes, and the first information includes the index of the first number of repetitions. The first information is 00, 01, 10, or 11, that is, the first information may indicate four preset repetition values. It is assumed that a repetition value corresponding to 00 is 1, a repetition value corresponding to 01 is 2, a repetition value corresponding to 10 is 4, and a repetition value corresponding to 11 is 8.

Manner 2: The first information is carried in fourth DCI, and the first downlink data is carried in a message 2 (message2, msg2) or a message 4 (message4, msg4) corresponding to a random access (random access, RA) procedure.

The following briefly describes random access. The network device sends, to the terminal device via system information, a random access resource, for example, a random access preamble, and a time-frequency resource for transmitting the random access preamble, namely, a random access occasion (RA occasion, RO), of a current cell. The following describes some steps of the random access procedure by using an example.

Step 1: The terminal device sends a random access request message, namely, a message 1 (message1, msg1), to the network device, where msg1 includes a random access preamble (random access preamble), and the terminal device may notify the network device of a random access request of the terminal device via the random access preamble.

Step 2: In response to the random access preamble, the network device sends a random access response message, namely, msg2, to the terminal device.

Step 3: The terminal device sends a contention resolution initiation message, namely, a message 3 (message3, msg3), to the network device.

Step 4: The network device sends a contention resolution response message, namely, msg4, to the terminal device, where uplink feedback information corresponding to msg4 indicates an acknowledge character (acknowledge character, ACK) or a negative acknowledge character (Negative ACK, NACK).

The following provides two configuration manners of the fourth DCI by using an example.

Configuration manner A: The fourth DCI includes a first field, and the first field indicates a number of repetitions of msg2 and an index of the number of repetitions of msg2; or the fourth DCI includes a second field, the second field indicates a second repetition indication or a second repetition offset, the second repetition indication indicates that the number of repetitions of msg2 is a first preset number of repetitions, and the second repetition offset indicates an offset value of the number of repetitions of msg2 relative to the first preset number of repetitions.

Configuration manner B: The fourth DCI includes a third field, and the third field indicates a number of repetitions of msg4 and an index of the number of repetitions of msg4; or the fourth DCI includes a fourth field, the fourth field indicates a third repetition indication or a third repetition offset, the third repetition indication indicates that the number of repetitions of msg4 is a second preset number of repetitions, and the third repetition offset indicates an offset value of the number of repetitions of msg4 relative to the second preset number of repetitions; or the fourth DCI includes a fifth field and a sixth field, the fifth field indicates a number of repetitions of msg2 and an index of the number of repetitions of msg2, the sixth field indicates a fourth repetition indication, and the fourth repetition indication indicates that the number of repetitions of msg4 is the number of repetitions indicated by the fifth field.

Optionally, in an implementation of the manner 2, the network device may combine the configuration manner A and the configuration manner B, that is, same DCI indicates the numbers of repetitions of msg2 and msg4. A combination manner and a number of occupied bytes may be flexibly adjusted. This is not limited in this application.

### Manner 3:

The first information includes numbers of repetitions corresponding to a plurality of synchronization signal blocks (synchronization signal block, SSB), the first number of repetitions is a number of repetitions corresponding to a first synchronization signal block in the plurality of synchronization signal blocks, the first synchronization signal block is any one of the plurality of synchronization signal blocks, and any synchronization signal block includes configuration information used to determine a random access signal occasion RO. As shown in FIG. 3b, in the manner 3, after step S301 and before step S302, the terminal device may further send msg1 to the network device in a first RO. Correspondingly, the network device may further receive msg1 sent by the terminal device in the first RO. In view of this, the network device may determine the first synchronization signal block based on the first RO, where the first synchronization information block is used to determine the first number N of repetitions. In this way, the network device may determine the first number N of repetitions of the first downlink data, to perform step S302. The terminal device may determine the first number N of repetitions based on the first RO, to receive N pieces of first downlink data, that is, perform step S302.

Optionally, the terminal device may further receive a second synchronization signal block from the network device, where the second synchronization signal block is any one of the plurality of synchronization signal blocks.

A person skilled in the art knows that there is a correspondence between an RO and an SSB, that is, one RO may correspond to a plurality of SSBs, or may correspond to one SSB. In view of this, the network device may indicate numbers of repetitions corresponding to different ROs, or the network device may indicate, in a broadcast manner, numbers of repetitions corresponding to different SSBs.

If one RO corresponds to a plurality of SSBs, a number of repetitions, of msg2, corresponding to the RO is determined based on an SSB with a lowest link budget in the plurality of SSBs. If one RO corresponds to one SSB, a number of repetitions, of msg2, corresponding to the RO is determined based on a link budget of the SSB.

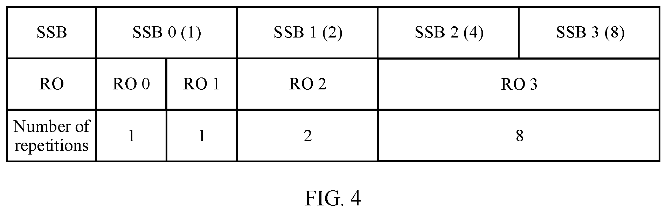

As shown in FIG. 4, it is assumed that a number of repetitions corresponding to an SSB 0 is 1, a number of repetitions corresponding to an SSB 1 is 2, a number of repetitions corresponding to an SSB 2 is 4, and a number of repetitions corresponding to an SSB 3 is 8. In view of this, if an RO 0 corresponds to the SSB 0, a number of repetitions corresponding to the RO 0 is 1. If an RO 1 corresponds to the SSB 0, a number of repetitions corresponding to the RO 1 is 1. If an RO 2 corresponds to the SSB 1, a number of repetitions corresponding to the RO 2 is 2. If an RO 3 corresponds to the SSB 2 and the SSB 3, it is clear that the SSB 3 is an SSB with a lowest link budget, and a number of repetitions corresponding to the RO 3 is 8.

In a possible design, before step S301 is performed, the terminal device sends a repetition request to the network device, where the repetition request is used to request to repeatedly transmit the first downlink data. Correspondingly, the network device receives the repetition request from the terminal device.

S302: The network device sends the N pieces of first downlink data to the terminal device at N first resource locations respectively, where the N first resource locations one-to-one correspond to the N pieces of first downlink data. Correspondingly, the terminal device receives the N pieces of first downlink data from the network device at the N first resource locations respectively.

In a standard protocol in this field, in a physical downlink control channel (physical downlink control channel, PDCCH) for scheduling msg2, scheduling information of msg2 is transmitted via DCI scrambled based on an RA-radio network temporary identifier (radio network temporary identifier, RNTI). In a PDCCH for scheduling msg4, scheduling information of msg4 is transmitted via DCI scrambled based on a temporary cell (temporary cell, TC)-RNTI. A format of the DCI scrambled based on the RA-RNTI includes 16 reserved bits (reserved bits), and the DCI scrambled based on the TC-RNTI does not include reserved bits (reserved bits).

In view of this, the fourth DCI in the foregoing manner 2 may be the DCI scrambled based on the RA-RNTI.

In a possible design of step S302, a process in which the network device sends the N pieces of first downlink data may include: The network device sends N first messages to the terminal device at the N first resource locations respectively. Correspondingly, the terminal device receives the N first messages from the network device at the N first resource locations respectively. Each first message includes one piece of first downlink data, and the first information indicates the first number N of repetitions of the first message.

Optionally, when the first number of repetitions is indicated in the foregoing manner 2, the first message is msg2 or msg4, and the fourth DCI in the foregoing manner 2 is DCI for scheduling msg2. Therefore, in a random access scenario, the network device and the terminal device may implement repeated data transmission in the foregoing manners, to reduce a latency caused by retransmission after waiting for feedback, and improve communication efficiency.

In view of this, this application provides the following indication manners as an example for description: When the first message is msg2, the fourth DCI uses the configuration manner A; or when the first message is msg4, the fourth DCI uses the configuration manner B.

In another possible design of step S302, when the first information is indicated in the foregoing manner 3, the first downlink data may be carried in msg2. In other words, a process in which the network device sends the N pieces of first downlink data may include: The network device sends N pieces of msg2 to the terminal device at the N first resource locations respectively. Correspondingly, the terminal device receives the N pieces of msg2 from the network device at the N first resource locations respectively. Each piece of msg2 includes one piece of first downlink data, and the first information indicates the first number N of repetitions of msg2.

This application provides the following two designs to implement resource scheduling of the first downlink data.

### Design 1:

The network device may further send first DCI to the terminal device, where the first DCI indicates the N first resource locations. Correspondingly, the terminal device receives the first DCI from the network device, where the first DCI indicates the N first resource locations.

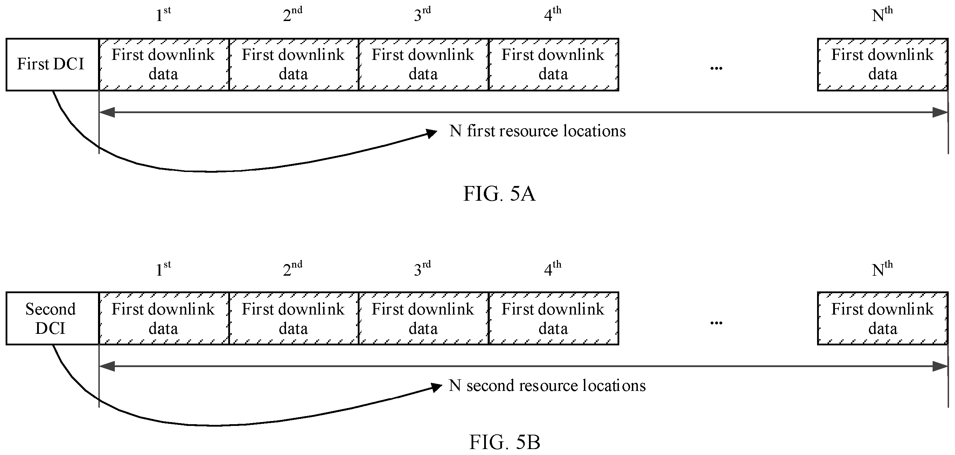

As shown in FIG. 5A, one piece of first DCI may indicate N consecutive first resource locations. Optionally, the first DCI may further indicate locations of first feedback resources corresponding to the N pieces of first downlink data sent at the N first resource locations, and the locations of the first feedback resources are located after the N first resource locations. Correspondingly, the terminal device may feed back ACK or NACK at the locations of the first feedback resources.

Optionally, in some scenarios, the network device may further send second DCI to the terminal device, where the second DCI indicates N second resource locations. Correspondingly, the terminal device receives the second DCI from the network device. The network device sends the N pieces of first downlink data to the terminal device at the N second resource locations respectively. Correspondingly, the terminal device receives the N pieces of first downlink data from the network device at the N second resource locations respectively. In the foregoing scenario, the network device may receive the NACK on the first feedback resources.

As shown in FIG. 5B, one piece of second DCI may indicate N consecutive second resource locations. Optionally, the second DCI may further indicate locations of second feedback resources corresponding to the N pieces of first downlink data sent at the N second resource locations, and the locations of the second feedback resources are located after the N second resource locations. Correspondingly, the terminal device may feed back ACK or NACK at the locations of the second feedback resources.

### Design 2:

The network device sends N pieces of third DCI to the terminal device, where the N pieces of third DCI one-to-one correspond to the N first resource locations, and any piece of third DCI indicates a corresponding first resource location. Correspondingly, the terminal device receives the N pieces of third DCI from the network device.

In a possible implementation of the design 2, the network device sends the N pieces of third DCI at N third resource locations respectively, where the N third resource locations and the N first resource locations are interleaved in time domain, or the N third resource locations and the N first resource locations are interleaved in frequency domain. Correspondingly, the terminal device receives the N pieces of third DCI from the network device at the N third resource locations respectively.

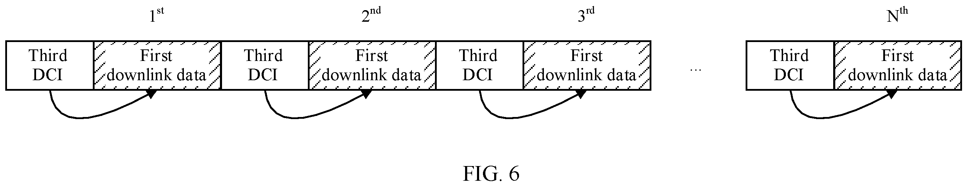

As shown in FIG. 6, the N pieces of third DCI one-to-one correspond to the N pieces of first downlink data.

Optionally, the third DCI may further indicate locations of third feedback resources corresponding to the N pieces of first downlink data sent at the N third resource locations, and the locations of the third feedback resources are located after the N third resource locations. Correspondingly, the terminal device may feed back ACK or NACK at the locations of the third feedback resources.

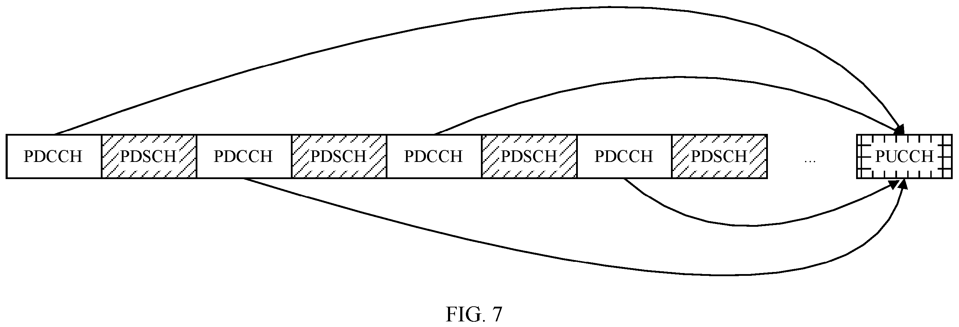

As shown in FIG. 7, the N pieces of third DCI respectively correspond to N PDCCHs, each PDCCH is used to schedule one physical downlink shared channel (physical downlink shared channel, PDSCH), and the PDSCH is used to transmit the first downlink data. The locations, of the third feedback resources, indicated by the N pieces of third DCI are all on a same physical uplink control channel (physical uplink control channel, PUCCH). In other words, the terminal device needs to feed back the ACK or the NACK only through the PUCCH.

Optionally, the network device may cyclically perform the solution of the design 1 or the design 2 for M rounds. In the rounds of cycles, values of N may be the same or different. The network device and the terminal device may agree on a value of N in each cycle according to a protocol, or the network device may configure a value of N in each cycle. Therefore, if the value of N in a cycle is greater than 1, the terminal device may also decode channel data in a corresponding receiving manner based on the value of N. If the value of N in a cycle is equal to 1, the terminal device may decode the channel data in a conventional receiving manner. For example, the network device may send M groups of DCI and M groups of first downlink data to the terminal device, and the terminal device receives the M groups of DCI and the M groups of first downlink data in a corresponding receiving manner. Each group of first downlink data includes the N pieces of first downlink data.

Optionally, in the M rounds of cycles, a total number of repetitions of the first downlink data is a maximum number W1 of retransmissions, and the terminal device determines, based on the maximum number W1 of retransmissions, whether to continue to monitor the channel data.

Optionally, the terminal device and the network device may agree on the maximum number W1 of retransmissions in advance. A manner of agreeing on the maximum number W1 of retransmissions is not limited in this application. For example, the maximum number W1 of retransmissions may be agreed on according to a protocol; or may be configured on a network device side and indicated to the terminal device by using the network device; or the terminal device and the network device determine the maximum number W1 of retransmissions according to a preset rule. When the maximum number W1 of retransmissions is 0, the network device and the terminal device do not perform actions in step S301 and step S302. When the maximum number W1 of retransmissions is greater than 0, the network device and the terminal device perform step S301 and step S302.

For example, when the values of N in the rounds of cycles are the same, the maximum number W1 of retransmissions, the first number N of repetitions, and the number M of rounds of cycles meet: $M = \left⌈\frac{W 1}{N}\right⌉$.

Optionally, in the M rounds of cycles, the terminal device determines, based on a location of a scheduled feedback resource, whether to continue to monitor the channel data. For example, at any node before the location of the feedback resource, when the terminal device fails to decode the first downlink data, the terminal device continues to monitor the channel data. On the contrary, when the terminal device successfully decodes the first downlink data, the terminal device stops monitoring the channel data, and feeds back ACK on the scheduled feedback resource.

Optionally, after each of the M rounds of cycles ends, if the terminal fails to decode the first downlink data, the terminal feeds back NACK on the scheduled feedback resource. Therefore, the network device may perform a next round of data transmission based on the NACK, or the network device may send data other than the first downlink data based on the NACK.

In a possible design, the first information in step S301 further indicates a second number X of retransmissions of first uplink data, and X is an integer greater than or equal to 2.

Optionally, a manner in which the first information indicates the second number of repetitions includes but is not limited to the following two manners:

Manner a: The first information includes the second number of repetitions; or the first information includes an index of the second number of repetitions; or the first information includes a fifth repetition indication, and the fifth repetition indication indicates that the second number of repetitions is a preset number of repetitions; or the first information includes a fourth repetition offset, and the fourth repetition offset indicates an offset value of the second number of repetitions relative to the preset number of repetitions; or the first information includes a second reference value, and the first reference value is used by the terminal device to determine the second number of repetitions according to a specified algorithm. It should be understood that for a specific indication manner of the first information in the manner a, refer to the descriptions in the manner 1.

### Manner b: The first information is carried in fifth DCI.

Optionally, the first uplink data may be carried in a message 5 (message5, msg5) corresponding to the random access procedure. It should be understood that after step 4 in the random access procedure, the network device and the terminal device may further perform step 5: The terminal device sends X physical uplink shared channel (physical uplink shared channel, PUSCH) messages, namely, msg5, to the network device, where X is the second number of repetitions. For example, when the uplink feedback information corresponding to msg4 indicates the NACK, msg5 may be a contention resolution initiation message.

The following provides one configuration manner of the fifth DCI by using an example. The fifth DCI and the fourth DCI may share one DCI resource.

Configuration manner C: The fifth DCI includes a seventh field, and the seventh field indicates a number of repetitions of msg5 and an index of the number of repetitions of msg5; or the fifth DCI includes an eighth field, the eighth field indicates a sixth repetition indication or a fifth repetition offset, the sixth repetition indication indicates that the number of repetitions of msg5 is a third preset number of repetitions, and the fifth repetition offset indicates an offset value of the number of repetitions of msg5 relative to the third preset number of repetitions; or the fifth DCI includes a ninth field and a tenth field, the ninth field indicates a number of repetitions of msg2 and an index of the number of repetitions of msg2, the tenth field includes a seventh repetition indication, and the seventh repetition indication indicates that the number of repetitions of msg5 is the number of repetitions indicated by the ninth field.

Optionally, based on the indication manner of the first number of repetitions in the manner 2 and the indication manner of the second number of repetitions in the manner b, the network device may combine the configuration manner A, the configuration manner B, and the configuration manner C, that is, the same DCI (for example, the fourth DCI) indicates the numbers of repetitions of msg2, msg4, and msg5. A combination manner and a number of occupied bytes may be flexibly adjusted. This is not limited in this application.

For example, the fourth DCI (or the fifth DCI) occupies 6 bytes, first 2 bytes indicate the index of the number of repetitions corresponding to msg2, middle 2 bytes indicate the index of the number of repetitions corresponding to msg4, and last 2 bytes indicate the index of the number of repetitions corresponding to msg5.

For another example, the fourth DCI (or the fifth DCI) occupies 5 bytes. First 2 bytes indicate a common preset number of repetitions corresponding to msg2/msg4/msg5, a 3^{rd} byte indicates an offset value of the number of repetitions of msg2 relative to the third preset number of repetitions, a 4^{th} byte indicates an offset value of the number of repetitions of msg4 relative to the third preset number of repetitions, and a 5^{th} byte indicates the offset value of the number of repetitions of msg5 relative to the third preset number of repetitions.

Optionally, to reduce signaling, when the network device and the terminal device agree in advance that numbers of repetitions of msg4 and msg5 are the same, the configuration manner B and the configuration manner C may be combined. In other words, the third field and the sixth field may share a same field resource, and the fifth field and the eighth field may share a same field resource.

Based on the foregoing designs, the communication method further includes the following step.

S303: The terminal device sends the X pieces of first uplink data to the network device at X fourth resource locations respectively. Correspondingly, the network device receives the X pieces of first uplink data from the terminal device at the X fourth resource locations respectively, where the X fourth resource locations one-to-one correspond to the X pieces of first uplink data.

It should be understood that when the first information indicates the second number X of retransmissions of the first uplink data, step S301 and step S303 may be performed separately as a communication method. Details are not described in this application.

In the standard protocol in this field, in the PDCCH for scheduling msg5, DCI scrambled based on a cell (cell, C)-RNTI is used to transmit scheduling information of msg5, and the DCI scrambled based on the C-RNTI does not include reserved bits. In view of this, the fifth DCI in the foregoing manner b may be the DCI scrambled based on the RA-RNTI.

In a possible design of step S302, a process in which the terminal device sends the X pieces of first uplink data may include: The terminal device sends X pieces of second information to the network device at the X fourth resource locations respectively. Correspondingly, the network device receives the X pieces of second information from the terminal device at the X fourth resource locations respectively. Each piece of second information includes one piece of first uplink data, and the first information indicates the second number X of repetitions of the second information.

Optionally, when the second number of repetitions is indicated in the foregoing manner b, the first message is msg5, and the fifth DCI in the foregoing manner b is DCI for scheduling msg2. Therefore, in the random access scenario, the network device and the terminal device may implement repeated data transmission in the foregoing manners, to reduce a latency caused by retransmission after waiting for feedback, and improve communication efficiency.

This application provides the following two designs to implement resource scheduling of the first uplink data.

### Design A:

The network device may further send sixth DCI to the terminal device, where the sixth DCI indicates the X fourth resource locations. Correspondingly, the terminal device receives the sixth DCI from the network device, where the sixth DCI indicates the X fourth resource locations. For example, one piece of sixth DCI may indicate X consecutive fourth resource locations. For a resource location relationship between the sixth DCI and the X pieces of first uplink data, refer to the resource location relationship between the first DCI and the N pieces of first downlink data in FIG. 5A. Details are not described herein again.

Optionally, in some scenarios, the network device may further send seventh DCI to the terminal device, where the seventh DCI indicates X fifth resource locations. Correspondingly, the terminal device receives the seventh DCI from the network device. The terminal device sends the X pieces of first uplink data to the network device at the X fifth resource locations respectively. Correspondingly, the network device receives the X pieces of first uplink data from the terminal device at the X fifth resource locations respectively. The foregoing scenario may be that the network device determines that the first uplink data is not obtained. For example, one piece of seventh DCI may indicate X consecutive fifth resource locations. For a resource location relationship between the seventh DCI and the X pieces of first uplink data, refer to the resource location relationship between the second DCI and the N pieces of first downlink data in FIG. 5B. Details are not described herein again.

### Design B:

The network device sends X pieces of eighth DCI to the terminal device, where the X pieces of eighth DCI one-to-one correspond to the X fourth resource locations, and any piece of eighth DCI indicates a corresponding fourth resource location. Correspondingly, the terminal device receives the X pieces of eighth DCI from the network device.

In a possible implementation of the design B, the network device sends the X pieces of eighth DCI at X sixth resource locations respectively, where the X sixth resource locations and the X fourth resource locations are interleaved in time domain, or the X sixth resource locations and the X fourth resource locations are interleaved in frequency domain. Correspondingly, the terminal device receives the X pieces of eighth DCI from the network device at the X sixth resource locations respectively. For example, for a resource location relationship between the X pieces of eighth DCI and the X pieces of first uplink data, refer to the resource location relationship between the N pieces of third DCI and the N pieces of first downlink data in FIG. 6.

Optionally, the network device may cyclically perform the solution of the design A or the design B for Y rounds. In the rounds of cycles, values of X may be the same or different. For a manner of indicating X in the Y rounds of cycles, refer to the foregoing manner of indicating N in the M rounds of cycles. Details are not described herein again.

Optionally, in the Y rounds of cycles, a total number of repetitions of the first uplink data is a maximum number W2 of retransmissions, and the terminal device determines, based on the maximum number W2 of retransmissions, whether to continue to send the first uplink data. For a manner of indicating W2 in the Y rounds of cycles, refer to the manner of indicating W1 in the M rounds of cycles. Details are not described herein again.

When the values of X in the rounds of cycles are the same, the maximum number W2 of retransmissions, the second number X of repetitions, and the number Y of rounds of cycles meet: $Y = \left⌈\frac{W 1}{X}\right⌉$.

To reduce signaling overheads, the network device and the terminal device may simultaneously agree on values of the maximum number W1 of retransmissions and the maximum number W2 of retransmissions. For example, the network device transmits the values of the maximum number W1 of retransmissions and the maximum number W2 of retransmissions to the terminal device via same signaling.

According to the method shown in step S301 and step S302, the network device may directly send the first downlink data to the terminal device at the N first resource locations, to reduce a latency caused by receiving feedback information by the network device, reduce a communication latency, improve communication efficiency, and implement enhanced downlink coverage. According to the method shown in step S301 to step S303, the network device may further indicate the second number of repetitions of the first uplink data, to reduce a probability that the terminal device fails to transmit the first uplink data, and reduce a latency generated when the terminal device receives feedback information indicating that the first uplink data fails to be uploaded. This can reduce a communication delay, improve communication efficiency, and implement enhanced uplink coverage.

The method provided in embodiments of this application is described above with reference to the accompanying drawings. Communication apparatuses provided in embodiments of this application are described below with reference to the accompanying drawings.

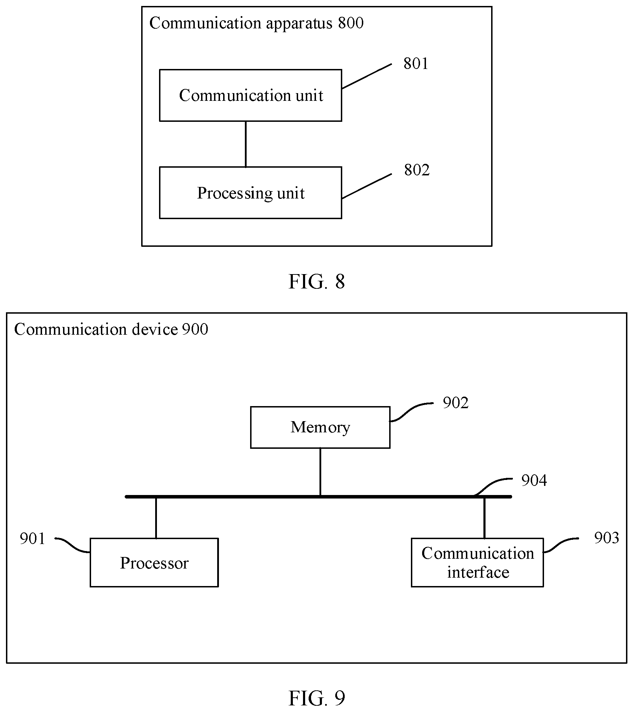

Based on a same technical concept, this application further provides a communication apparatus. The communication apparatus is configured to implement the communication method provided in the foregoing embodiments. Refer to FIG. 8. A communication apparatus 800 includes a communication unit 801 and a processing unit 802. The communication unit 801 is configured to receive and send data. The processing unit 802 is configured to implement the steps of the communication method shown in FIG. 3a.

In a possible implementation, the communication apparatus 800 is the network device in the embodiment shown in FIG. 3a. The processing unit 802 is configured to use the communication unit 801 to perform the following steps: sending first information to a terminal device, where the first information indicates a first number N of repetitions of first downlink data, and N is an integer greater than or equal to 2; and sending N pieces of first downlink data to the terminal device at N first resource locations respectively, where the N first resource locations one-to-one correspond to the N pieces of first downlink data.

In a possible design, the processing unit 802 is further configured to use the communication unit 801 to perform the following step: sending first DCI to the terminal device, where the first DCI indicates the N first resource locations.

In a possible design, the processing unit 802 is further configured to use the communication unit 801 to perform the following steps: sending second DCI to the terminal device, where the second DCI indicates N second resource locations; and sending the N pieces of first downlink data to the terminal device at the N second resource locations respectively.

In a possible design, the processing unit 802 is further configured to use the communication unit 801 to perform the following step: sending N pieces of third DCI to the terminal device, where the N pieces of third DCI one-to-one correspond to the N first resource locations, and any piece of third DCI indicates a corresponding first resource location.

In a possible design, the processing unit 802 is specifically configured to use the communication unit 801 to perform the following step: sending the N pieces of third DCI at N third resource locations respectively, where the N third resource locations and the N first resource locations are interleaved in time domain, or the N third resource locations and the N first resource locations are interleaved in frequency domain.

In a possible design, the first information includes the first number of repetitions; or the first information includes an index of the first number of repetitions; or the first information includes a first repetition indication, and the first repetition indication indicates that the first number of repetitions is a preset number of repetitions; or the first information includes a first repetition offset, and the first repetition offset indicates an offset value of the first number of repetitions relative to the preset number of repetitions; or the first information includes a first reference value, and the first reference value is used by the terminal device to determine the first number of repetitions according to a specified algorithm.

In a possible design, the first information is carried in fourth DCI.

In a possible design, the processing unit 802 is specifically configured to use the communication unit 801 to perform the following step: sending N first messages to the terminal device at the N first resource locations respectively, where each first message includes one piece of first downlink data, and the first information indicates the first number N of repetitions of the first message.

In a possible design, the first message is msg2 or msg4, and the fourth DCI is DCI for scheduling msg2.

In a possible design, when the first message is msg2, configuration of the fourth DCI includes any one of the following: The fourth DCI includes a first field, and the first field indicates a number of repetitions of msg2 and an index of the number of repetitions of msg2; and the fourth DCI includes a second field, the second field indicates a second repetition indication or a second repetition offset, the second repetition indication indicates that the number of repetitions of msg2 is a first preset number of repetitions, and the second repetition offset indicates an offset value of the number of repetitions of msg2 relative to the first preset number of repetitions.

Alternatively, when the first message is msg4, configuration of the fourth DCI includes any one of the following: The fourth DCI includes a third field, and the third field indicates a number of repetitions of msg4 and an index of the number of repetitions of msg4; the fourth DCI includes a fourth field, the fourth field indicates a third repetition indication or a third repetition offset, the third repetition indication indicates that the number of repetitions of msg4 is a second preset number of repetitions, and the third repetition offset indicates an offset value of the number of repetitions of msg4 relative to the second preset number of repetitions; and the fourth DCI includes a fifth field and a sixth field, the fifth field indicates a number of repetitions of msg2 and an index of the number of repetitions of msg2, the sixth field indicates a fourth repetition indication, and the fourth repetition indication indicates that the number of repetitions of msg4 is the number of repetitions indicated by the fifth field.

In a possible design, the first downlink data is carried in msg2, the first information includes numbers of repetitions corresponding to a plurality of synchronization signal blocks, the first number of repetitions is a number of repetitions corresponding to a first synchronization signal block in the plurality of synchronization signal blocks, the first synchronization signal block is any one of the plurality of synchronization signal blocks, and any synchronization signal block includes configuration information used to determine an RO. The processing unit 802 is further configured to use the communication unit 801 to perform the following steps: receiving msg1 sent by the terminal device in a first RO, and determining the first synchronization signal block based on the first RO.

In a possible design, the processing unit 802 is further configured to use the communication unit 801 to perform the following step: receiving a repetition request from the terminal device, where the repetition request is used to request to repeatedly transmit the first downlink data.

In a possible design, the first information further indicates a second number X of repetitions of first uplink data, and X is an integer greater than or equal to 2. The processing unit 802 is further configured to receive X pieces of first uplink data from the terminal device at X fourth resource locations respectively, where the X fourth resource locations one-to-one correspond to the X pieces of first uplink data.

In another possible implementation, the communication apparatus 800 is the terminal device in the embodiment shown in FIG. 3a. The processing unit 802 is configured to use the communication unit 801 to perform the following steps: receiving first information from a network device, where the first information indicates a first number N of repetitions of first downlink data, and N is an integer greater than or equal to 2; and receiving N pieces of first downlink data from the network device at N first resource locations respectively, where the N first resource locations one-to-one correspond to the N pieces of first downlink data.

In a possible design, the processing unit 802 is further configured to use the communication unit 801 to perform the following step: receiving first DCI from the network device, where the first DCI indicates the N first resource locations.

In a possible design, the processing unit 802 is further configured to use the communication unit 801 to perform the following steps: receiving second DCI from the network device, where the second DCI indicates N second resource locations; and receiving the N pieces of first downlink data from the network device at the N second resource locations respectively.

In a possible design, the processing unit 802 is further configured to use the communication unit 801 to perform the following step: receiving N pieces of third DCI from the network device, where the N pieces of third DCI one-to-one correspond to the N first resource locations, and any piece of third DCI indicates a corresponding first resource location.

In a possible design, the processing unit 802 is specifically configured to use the communication unit 801 to perform the following step: receiving the N pieces of third DCI from the network device at N third resource locations respectively, where the N third resource locations and the N first resource locations are interleaved in time domain, or the N third resource locations and the N first resource locations are interleaved in frequency domain.

In a possible design, the first information includes the first number of repetitions; or the first information includes an index of the first number of repetitions; or the first information includes a first repetition indication, and the first repetition indication indicates that the first number of repetitions is a preset number of repetitions; or the first information includes a first repetition offset, and the first repetition offset indicates an offset value of the first number of repetitions relative to the preset number of repetitions; or the first information includes a first reference value, and the first reference value is used to determine the first number of repetitions according to a specified algorithm.

In a possible design, the first information is carried in fourth DCI.

In a possible design, the processing unit 802 is specifically configured to use the communication unit 801 to perform the following step: receiving N first messages from the network device at the N first resource locations respectively, where each first message includes one piece of first downlink data, and the first information indicates the first number N of repetitions of the first message.

In a possible design, the first message is msg2 or msg4, and the fourth DCI is DCI for scheduling msg2.

In a possible design, when the first message is msg2, configuration of the fourth DCI includes any one of the following: The fourth DCI includes a first field, and the first field indicates a number of repetitions of msg2 and an index of the number of repetitions of msg2; and the fourth DCI includes a second field, the second field indicates a second repetition indication or a second repetition offset, the second repetition indication indicates that the number of repetitions of msg2 is a first preset number of repetitions, and the second repetition offset indicates an offset value of the number of repetitions of msg2 relative to the first preset number of repetitions.

Alternatively, when the first message is msg4, configuration of the fourth DCI includes any one of the following: The fourth DCI includes a third field, and the third field indicates a number of repetitions of msg4 and an index of the number of repetitions of msg4; the fourth DCI includes a fourth field, the fourth field indicates a third repetition indication or a third repetition offset, the third repetition indication indicates that the number of repetitions of msg4 is a second preset number of repetitions, and the third repetition offset indicates an offset value of the number of repetitions of msg4 relative to the second preset number of repetitions; and the fourth DCI includes a fifth field and a sixth field, the fifth field indicates a number of repetitions of msg2 and an index of the number of repetitions of msg2, the sixth field indicates a fourth repetition indication, and the fourth repetition indication indicates that the number of repetitions of msg4 is the number of repetitions indicated by the fifth field.

In a possible design, the first downlink data is carried in msg2, the first information includes numbers of repetitions corresponding to a plurality of synchronization signal blocks, the first number of repetitions is a number of repetitions corresponding to a first synchronization signal block in the plurality of synchronization signal blocks, the first synchronization signal block is any one of the plurality of synchronization signal blocks, and any synchronization signal block includes configuration information used to determine an RO. The processing unit 802 is further configured to use the communication unit 801 to perform the following steps: sending msg1 to the network device in a first RO, and determining the first number N of repetitions based on the first RO.

In a possible design, the processing unit 802 is further configured to use the communication unit 801 to perform the following step: sending a repetition request to the network device, where the repetition request is used to request to repeatedly transmit the first downlink data.

In a possible design, the first information further indicates a second number X of repetitions of first uplink data, and X is an integer greater than or equal to 2. The processing unit 802 is further configured to send X pieces of first uplink data to the network device at X fourth resource locations respectively, where the X fourth resource locations one-to-one correspond to the X pieces of first uplink data.

Based on a same technical concept, an embodiment of this application further provides a communication device. The communication device 900 may implement the communication method provided in the foregoing embodiments, and has a function of the communication apparatus 800 provided in the foregoing embodiments. As shown in FIG. 9, the communication device 900 includes a memory 902 and a processor 901. Optionally, the communication device 900 further includes a communication interface 903. The communication interface 903, the processor 901, and the memory 902 are connected to each other.

Optionally, the communication interface 903, the processor 901, and the memory 902 are connected to each other through a bus 904. The bus 904 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

The communication interface 903 is configured to receive and send signals, to communicate with a device other than the communication device.

For a function of the processor 901, refer to the descriptions in the foregoing embodiments. Details are not described herein again. The processor 901 may be a central processing unit (central processing unit, CPU), a network processor (network processor, NP), a combination of a CPU and an NP, or the like. The processor 901 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof. The processor 901 may implement the foregoing functions by using hardware or certainly by using hardware executing corresponding software.

The memory 902 is configured to store program instructions and the like. Specifically, the program instructions may include program code. The program code includes computer operation instructions. The memory 902 may include a random access memory (random access memory, RAM), and may further include a non-volatile memory (non-volatile memory), for example, at least one magnetic disk memory. The processor 901 executes the program instructions stored in the memory 902, to implement the foregoing functions, so as to implement the method provided in the foregoing embodiments. For example, the memory 902 may include the network device or the terminal device shown in embodiments of this application.

Based on a same technical concept, an embodiment of this application further provides a computer program. When the computer program is run on a computer, the computer is caused to perform the method provided in the foregoing embodiments.

Based on a same technical concept, an embodiment of this application further provides a computer-readable storage medium. The computer-readable storage medium stores a computer program. When the computer program is run on a computer, the computer is caused to perform the method provided in the foregoing embodiments.

The storage medium may be any usable medium that can be accessed by the computer. By way of example rather than limitation, the computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on a same technical concept, an embodiment of this application further provides a chip. The chip is configured to read a computer program stored in a memory, to implement the method provided in the foregoing embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device are used to provide a step for implementing a specific function in one or more processes in the flowcharts and/or in one or more blocks in the block diagrams.

It is clear that a person skilled in the art can make various modifications and variations to this application without departing from the scope of this application. This application is intended to cover the modifications and variations of this application, provided that they fall within the scope of the following claims and equivalent technologies of this application.

## Claims

1. A communication method, wherein the method comprises:
sending, by a network device, first information to a terminal device, wherein the first information indicates a first number N of repetitions of first downlink data, and N is an integer greater than or equal to 2; and
sending, by the network device, N pieces of first downlink data to the terminal device at N first resource locations respectively, wherein the N first resource locations one-to-one correspond to the N pieces of first downlink data.

2. The method according to claim 1, wherein the method further comprises:
sending, by the network device, first downlink control information DCI to the terminal device, wherein the first DCI indicates the N first resource locations.

3. The method according to claim 2, wherein the method further comprises:
sending, by the network device, second DCI to the terminal device, wherein the second DCI indicates N second resource locations; and
sending, by the network device, the N pieces of first downlink data to the terminal device at the N second resource locations respectively.

4. The method according to claim 1, wherein the method further comprises:
sending, by the network device, N pieces of third DCI to the terminal device, wherein the N pieces of third DCI one-to-one correspond to the N first resource locations, and any piece of third DCI indicates a corresponding first resource location.

5. The method according to claim 4, wherein sending, by the network device, the N pieces of third DCI to the terminal device comprises:
sending, by the network device, the N pieces of third DCI at N third resource locations respectively, wherein
the N third resource locations and the N first resource locations are interleaved in time domain, or the N third resource locations and the N first resource locations are interleaved in frequency domain.

6. The method according to any one of claims 1 to 5, wherein
the first information comprises the first number of repetitions; or
the first information comprises an index of the first number of repetitions; or
the first information comprises a first repetition indication, and the first repetition indication indicates that the first number of repetitions is a preset number of repetitions; or
the first information comprises a first repetition offset, and the first repetition offset indicates an offset value of the first number of repetitions relative to the preset number of repetitions; or
the first information comprises a first reference value, and the first reference value is used by the terminal device to determine the first number of repetitions according to a specified algorithm.

7. The method according to any one of claims 1 to 5, wherein the first information is carried in fourth DCI.

8. The method according to claim 7, wherein sending, by the network device, the N pieces of first downlink data to the terminal device at the N first resource locations respectively comprises:
sending, by the network device, N first messages to the terminal device at the N first resource locations respectively, wherein each first message comprises one piece of first downlink data, wherein
the first information indicates the first number N of repetitions of the first message.

9. The method according to claim 8, wherein the first message is a message 2 msg2 or a message 4 msg4, and the fourth DCI is DCI for scheduling msg2.

10. The method according to claim 9, wherein
when the first message is msg2, configuration of the fourth DCI comprises any one of the following:
the fourth DCI comprises a first field, and the first field indicates a number of repetitions of msg2 and an index of the number of repetitions of msg2; and
the fourth DCI comprises a second field, the second field indicates a second repetition indication or a second repetition offset, the second repetition indication indicates that the number of repetitions of msg2 is a first preset number of repetitions, and the second repetition offset indicates an offset value of the number of repetitions of msg2 relative to the first preset number of repetitions; or
when the first message is msg4, configuration of the fourth DCI comprises any one of the following:
the fourth DCI comprises a third field, and the third field indicates a number of repetitions of msg4 and an index of the number of repetitions of msg4;
the fourth DCI comprises a fourth field, the fourth field indicates a third repetition indication or a third repetition offset, the third repetition indication indicates that the number of repetitions of msg4 is a second preset number of repetitions, and the third repetition offset indicates an offset value of the number of repetitions of msg4 relative to the second preset number of repetitions; and
the fourth DCI comprises a fifth field and a sixth field, the fifth field indicates a number of repetitions of msg2 and an index of the number of repetitions of msg2, the sixth field indicates a fourth repetition indication, and the fourth repetition indication indicates that the number of repetitions of msg4 is the number of repetitions indicated by the fifth field.

11. The method according to any one of claims 1 to 5 or claim 7, wherein the first downlink data is carried in msg2, the first information comprises numbers of repetitions corresponding to a plurality of synchronization signal blocks, the first number of repetitions is a number of repetitions corresponding to a first synchronization signal block in the plurality of synchronization signal blocks, the first synchronization signal block is any one of the plurality of synchronization signal blocks, any synchronization signal block comprises configuration information used to determine a random access signal occasion RO, and the method further comprises:
receiving, by the network device, a message 1 msg1 sent by the terminal device in a first RO; and
determining, by the network device, the first synchronization signal block based on the first RO.

12. The method according to any one of claims 1 to 11, wherein the method further comprises:
receiving, by the network device, a repetition request from the terminal device, wherein the repetition request is used to request to repeatedly transmit the first downlink data.

13. The method according to any one of claims 1 to 12, wherein the first information further indicates a second number X of repetitions of first uplink data, X is an integer greater than or equal to 2, and the method further comprises:
receiving, by the network device, X pieces of first uplink data from the terminal device at X fourth resource locations respectively, wherein the X fourth resource locations one-to-one correspond to the X pieces of first uplink data.

14. A communication method, wherein the method comprises:
receiving, by a terminal device, first information from a network device, wherein the first information indicates a first number N of repetitions of first downlink data, and N is an integer greater than or equal to 2; and
receiving, by the terminal device, N pieces of first downlink data from the network device at N first resource locations respectively, wherein the N first resource locations one-to-one correspond to the N pieces of first downlink data.

15. The method according to claim 14, wherein the method further comprises:
receiving, by the terminal device, first downlink control information DCI from the network device, wherein the first DCI indicates the N first resource locations.

16. The method according to claim 15, wherein the method further comprises:
receiving, by the terminal device, second DCI from the network device, wherein the second DCI indicates N second resource locations; and
receiving, by the terminal device, the N pieces of first downlink data from the network device at the N second resource locations respectively.

17. The method according to claim 14, wherein the method further comprises:
receiving, by the terminal device, N pieces of third DCI from the network device, wherein the N pieces of third DCI one-to-one correspond to the N first resource locations, and any piece of third DCI indicates a corresponding first resource location.

18. The method according to claim 17, wherein receiving, by the terminal device, the N pieces of third DCI from the network device comprises:
receiving, by the terminal device, the N pieces of third DCI from the network device at N third resource locations respectively, wherein
the N third resource locations and the N first resource locations are interleaved in time domain, or the N third resource locations and the N first resource locations are interleaved in frequency domain.

19. The method according to any one of claims 14 to 18, wherein
the first information comprises the first number of repetitions; or
the first information comprises an index of the first number of repetitions; or
the first information comprises a first repetition indication, and the first repetition indication indicates that the first number of repetitions is a preset number of repetitions; or
the first information comprises a first repetition offset, and the first repetition offset indicates an offset value of the first number of repetitions relative to the preset number of repetitions; or
the first information comprises a first reference value, and the first reference value is used by the terminal device to determine the first number of repetitions according to a specified algorithm.

20. The method according to any one of claims 14 to 18, wherein the first information is carried in fourth DCI.

21. The method according to claim 20, wherein receiving, by the terminal device, the N pieces of first downlink data from the network device at the N first resource locations respectively comprises:
receiving, by the terminal device, N first messages from the network device at the N first resource locations respectively, wherein each first message comprises one piece of first downlink data, wherein
the first information indicates the first number N of repetitions of the first message.

22. The method according to claim 21, wherein the first message is a message 2 msg2 or a message 4 msg4, and the fourth DCI is DCI for scheduling msg2.

23. The method according to claim 22, wherein
when the first message is msg2, configuration of the fourth DCI comprises any one of the following:
the fourth DCI comprises a first field, and the first field indicates a number of repetitions of msg2 and an index of the number of repetitions of msg2; and
the fourth DCI comprises a second field, the second field indicates a second repetition indication or a second repetition offset, the second repetition indication indicates that the number of repetitions of msg2 is a first preset number of repetitions, and the second repetition offset indicates an offset value of the number of repetitions of msg2 relative to the first preset number of repetitions; or
when the first message is msg4, configuration of the fourth DCI comprises any one of the following:
the fourth DCI comprises a third field, and the third field indicates a number of repetitions of msg4 and an index of the number of repetitions of msg4;
the fourth DCI comprises a fourth field, the fourth field indicates a third repetition indication or a third repetition offset, the third repetition indication indicates that the number of repetitions of msg4 is a second preset number of repetitions, and the third repetition offset indicates an offset value of the number of repetitions of msg4 relative to the second preset number of repetitions; and
the fourth DCI comprises a fifth field and a sixth field, the fifth field indicates a number of repetitions of msg2 and an index of the number of repetitions of msg2, the sixth field indicates a fourth repetition indication, and the fourth repetition indication indicates that the number of repetitions of msg4 is the number of repetitions indicated by the fifth field.

24. The method according to any one of claims 14 to 18 or claim 20, wherein the first downlink data is carried in msg2, the first information comprises numbers of repetitions corresponding to a plurality of synchronization signal blocks, the first number of repetitions is a number of repetitions corresponding to a first synchronization signal block in the plurality of synchronization signal blocks, the first synchronization signal block is any one of the plurality of synchronization signal blocks, any synchronization signal block comprises configuration information used to determine a random access signal occasion RO, and the method further comprises:
sending, by the terminal device, a message 1 msg1 to the network device in a first RO; and
determining, by the terminal device, the first number N of repetitions based on the first RO.

25. The method according to any one of claims 14 to 24, wherein the method further comprises:
sending, by the terminal device, a repetition request to the network device, wherein the repetition request is used to request to repeatedly transmit the first downlink data.

26. The method according to any one of claims 14 to 25, wherein the first information further indicates a second number X of repetitions of first uplink data, X is an integer greater than or equal to 2, and the method further comprises:
sending, by the terminal device, X pieces of first uplink data to the network device at X fourth resource locations respectively, wherein the X fourth resource locations one-to-one correspond to the X pieces of first uplink data.

27. A communication apparatus, comprising a communication unit and a processing unit, wherein
the communication unit is configured to receive and send data; and
the processing unit is configured to perform the method according to any one of claims 1 to 26.

28. A communication device, comprising at least one processor and a memory, wherein
the at least one processor is coupled to the memory, and the at least one processor is configured to read a computer program stored in the memory, to perform the method according to any one of claims 1 to 26.

29. A computer-readable storage medium, wherein the computer-readable storage medium stores computer-executable instructions; and when the computer-executable instructions are invoked by a computer, the computer is enabled to perform the method according to any one of claims 1 to 26.

30. A chip system, comprising a communication interface and a processor, wherein
the communication interface is configured to input and/or output signaling or data; and
the processor is configured to execute a computer-executable program, to enable a device on which the chip system is installed to perform the method according to any one of claims 1 to 26.

31. A computer program product, wherein the computer program product stores a computer program or instructions, and when the computer program or the instructions is/are executed by a communication apparatus, the computer performs the method according to any one of claims 1 to 26.

32. A communication system, comprising a network device and a terminal device, wherein the network device is configured to perform the method according to any one of claims 1 to 13, and the terminal device is configured to perform the method according to any one of claims 14 to 26.
